## Europäisches Patentamt

## European Patent Office

## Office européen des brevets

(11) Veröffentlichungsnummer: **0 084 787**
**B1**

# EUROPÄISCHE PATENTSCHRIFT

(45) Veröffentlichungstag der Patentschrift:
23.04.86

(21) Anmeldenummer: 83100125.0

(22) Anmeldetag: 08.01.83

(51) Int. Cl.⁴: **H 04 L 7/08,** H 04 B 7/185,
H 04 J 3/06

(54) **System zur Übertragung von digitalen Informationssignalen.**

(30) Priorität: 22.01.82 DE 3201934

(43) Veröffentlichungstag der Anmeldung:
03.08.83 Patentblatt 83/31

(45) Bekanntmachung des Hinweises auf die Patenterteilung:
23.04.86 Patentblatt 86/17

(84) Benannte Vertragsstaaten:
AT BE CH DE FR GB IT LI LU NL SE

(56) Entgegenhaltungen:
EP - A - 0 004 562
DE - A - 2 653 968
DE - A - 3 013 554
US - A - 3 879 580
US - A - 3 896 265

(73) Patentinhaber: **TELEFUNKEN Fernseh und Rundfunk GmbH, Göttinger Chaussee 76, D-3000 Hannover 91 (DE)**

(72) Erfinder: **Stark, Dieter, Dipl.-Ing., Am Winkelberge 21, D-3008 Garbsen (DE)**
Erfinder: **Korte, Hermann W. W., Dipl.-Ing., Masurenweg 46, D-3002 Wedemark 1 (DE)**

(74) Vertreter: **Einsel, Robert, Dipl.-Ing., TELEFUNKEN Fernseh und Rundfunk GmbH Göttinger Chaussee 76, D-3000 Hannover 91 (DE)**

ACTORUM AG

## Beschreibung

Die Erfindung betrifft ein System zur digitalen Informationssignalübertragung, insbesondere für die digitale Übertragung über Satelliten, nach dem Oberbegriff des Anspruchs 1.

Bei einer bitseriellen Datenübertragung werden die aus Codewörtern bestehenden Datenblöcke, nämlich Rahmen und gegebenenfalls Teilrahmen, periodisch wiederholt. Um die Datenblöcke richtig decodieren zu können, ist es erforderlich, die zeitliche Lage des Rahmens zu erkennen. Bei der Verwendung von selbstsynchronisierenden Codes wird durch erhöhte Redundanzanforderung die Bandbreite der Übertragung vergrössert. Ein sogenannter Komma-Code vermeidet eine nennenswerte Vergrösserung der Bandbreite. Insbesondere bei einer 4-Phasen CPSK Modulation wird durch einen Komma-Code auf Grund der Rahmenstruktur die Datenregenerierung sichergestellt. CPSK steht für coherent phase shift keying (kohärente Phasenumtastung).

Jeder Übertragungsblock des digitalen Signals enthält dabei ein vorangestelltes Codewort, das Synchronwort, das der Synchronisationserkennung dient. Darauf folgt im allgemeinen eine Folge von Datencodewörtern, die auch Prüfinformationen enthalten.

In dem zu betrachtenden Übertragungsweg können Zeitfehler und Amplitudenfehler auftreten. Bei der Taktregenerierung verursachen Zeitfehler sogenannte Bitslips. Amplitudenfehler, d.h. Bitinvertierungen, verfälschen Daten und Synchronisationswort. Bei der Verwendung einer 4-Phasen CPSK Modulation ist es erforderlich, die Mehrdeutigkeit der Phasendemodulation bei der Datenregenerierung zu kompensieren. Es sind aus der Literatur Synchronisationsworte (Barker, Maury) bekannt, bei denen eine geringe Anzahl von Bitfehlern in einem Synchronisationswort die Eindeutigkeit der Synchronworterkennung nicht beeinträchtigen.

Aus DE-A 1 30 13 554 ist ein digitales Signalübertragungssystem bekannt, bei dem in einem einzigen Datenstrom Synchronwörter seriell übertragen und verarbeitet werden. Es werden dabei zwei Komparatoren verwendet, die nicht gleichzeitig arbeiten und den Datenstrom auf die unterschiedlichen Synchronwörter untersuchen. Ein Beseitigen einer Phasenmehrdeutigkeit ist mit oberem Verfahren nicht möglich.

Der Erfindung liegt die Aufgabe zugrunde, bei einem System zur digitalen Informationssignalübertragung die Erkennung der zeitlichen Lage des Datenstroms zu verbessern, sowie den Einfluss von Zeitfehlern, Amplitudenfehlern und Phasenmehrdeutigkeiten zu kompensieren.

Die Aufgabe wird durch die im Anspruch 1 angegebene Erfindung gelöst. Weitergehende Ausgestaltungen der Erfindung sind in Unteransprüchen beschrieben.

Durch Verwendung des erfindungsgemässen Systems wird die zeitliche Lage des Rahmens mit hinreichender Sicherheit erkannt. Die Länge des Synchronisationswortes ist im Verhältnis zur Teilrahmenlänge relativ kurz und die damit verbundene Redundanz ist minimal. Die Synchronisationswörter sind so gewählt, dass ein Ausfall der Synchronisation wesentlich seltener als unkorrigierbare Fehler in der Information auftritt.

Zur empfangsseitigen Erkennung der Synchronisationswörter sind die Wörter in einer ausgezeichneten Zeitlage in Korrelatoren zu betrachten. Die Synchronisationswörter enthalten in der unverschobenen Lage der Autokorrelationsfunktion, d.h. für den Zeitpunkt $T = 0$, ein ausgeprägtes Maximum. Für alle Zeitpunkte $T \neq 0$, ist die Autokorrelationsfunktion betragsmässig minimal.

Eine CPSK-Modulation weist eine Phasenvieldeutigkeit auf. Das kann dazu führen, dass das Synchronisationswort in invertierter Lage am Empfänger ankommt. Die Synchronisationsworte weisen daher für alle Zeitpunkte $T \neq 0$ eine sehr kleine Differenz zwischen Autokorrelationsfunktion und invertierter Autokorrelationsfunktion auf, so dass die Synchronisationsworte auch in invertierter Lage sicher erkannt werden.

Die Mehrdeutigkeit der CPSK-Demodulation kann durch die Auswertung der im Empfänger gebildeten Korrelationsfunktion zwischen den abgespeicherten und empfangenen Sync-Wort kompensiert werden. Die zeitliche Lage des Rahmenbeginns wird durch das Ergebnis des im Korrelator bestimmten Wertes und einer nachgeschalteten Schwellwertlogik insoweit bestimmt, dass die aus beiden Korrelatoren abgeleiteten Steuersignale einer Logikschaltung zugeführt werden, die in einem definierten Zeitfenster abgefragt werden.

Zur Korrektur von Zeitfehlern, die zu einem Bitslip führen können, wird vorgeschlagen, die Kreuzkorrelationsfunktion in einem geringfügig verbreiterten Zeitfenster zu prüfen. An Hand der Lage des Maximums der Kreuzkorrelationsfunktion innerhalb dieses Zeitfensters kann unmittelbar auf das Auftreten und die Grösse eines Bitslips geschlossen und für den nächsten Rahmen korrigiert werden. Hierzu muss die Kreuzkorrelationsfunktion für den Zeitpunkt $T = 0$ betragsmässig grösser sein als die Kreuzkorrelationsfunktion für Zeitpunkte $T \neq 0$. Dies ist jedoch nur bis zu einer maximalen Anzahl von Bitfehlern im Synchronisationswort möglich. Die maximal zulässige Anzahl von Bitfehlern ist um so grösser, je länger das Synchronwort gewählt wird. Zwischen den beiden Forderungen nach geringer Redundanz und hoher Restfehlerwahrscheinlichkeit wurde ein günstiger Kompromiss abgeleitet.

Durch die Synchronworte können bei einer Länge des Synchronwortes von 16 Bit bis zu 3 beliebige Bitfehler in einem Synchronwort zugelassen werden, ohne dass die Eindeutigkeit der Synchronworterkennung verloren geht. Wenn die Fensterbreite zur Prüfung des Synchronwortes mehr als 1 Bit beträgt, ist zu berücksichtigen, dass das Synchronwort durch Bitfehler, hervorgerufen durch den gestörten Kanal und durch benachbarte Daten, verfälscht sein kann.

Mit den Synchronisationswörtern können bei einer Fensterbreite von fünf Taktschritten durch eine Schwellwertlogik Bitslips von bis zu ± 2 Taktschritten erkannt und die zeitliche Verschiebung aufgehoben werden. Um das Kriterium, dass der Ausfall der Synchronisation wesentlich seltener auftreten soll, als die maximale zulässige Restfehlerwahrscheinlichkeit für nicht korrigierbar verfälschte Informationen vorgibt, zu erfüllen, wird vorgeschlagen, bei einer Aufteilung des Hauptrahmens in zwei Teilrahmen (Bitebene A und B) zur Synchronisation in beiden Teilrahmen ein gleiches oder äquivalentes Muster der gleichen Länge vorzusehen. Mit je einem Korrelator für die Teilrahmen A und B können beide Synchronwörter gleichzeitig geprüft, daraus die zeitliche Lage des Rahmens erkannt und die Mehrdeutigkeit der Phasendemodulation aufgehoben werden. Durch die Verwendung dieses Systems zur Rahmensynchronisation treten erst dann Synchronisationsfehler auf, wenn beide Synchronisationsworte jeweils durch vier Bitfehler gestört sind.

Die Erfindung wird nachstehend an Hand eines Ausführungsbeispiels näher beschrieben.

Es zeigen:

Fig. 1 ein Blockschaltbild zur Auswertung der Synchronisationswörter in den Teilrahmen A und B,

Fig. 2 ein Blockschaltbild zur Ermittlung der Kreuzkorrelationsfunktion,

Fig. 3 eine Gabelschaltung,

Fig. 4 eine Tabelle,

Fig. 5 eine Schaltung zur Lagebestimmung des Synchronisationswortes,

Fig. 6 eine Ablaufsteuerung.

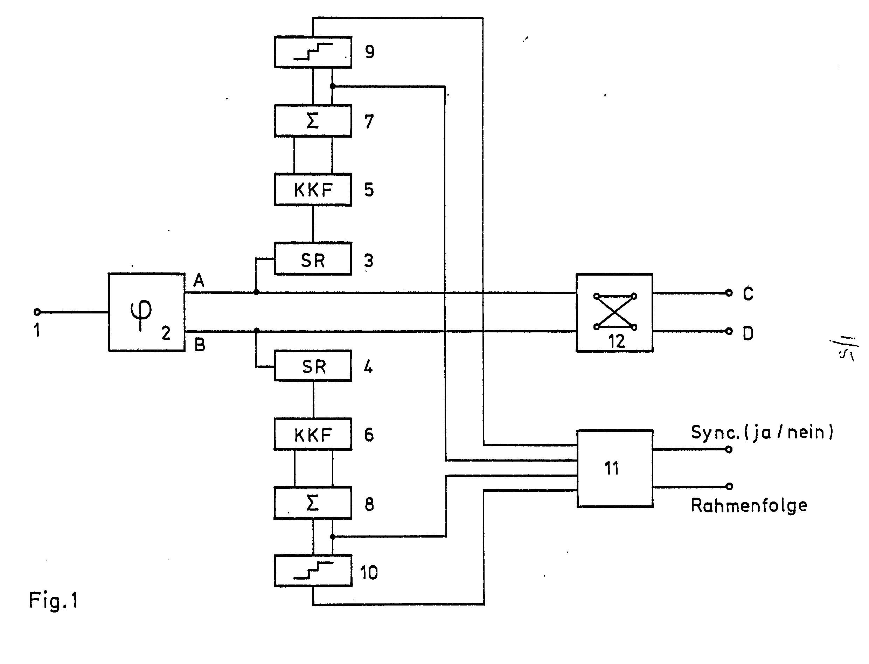

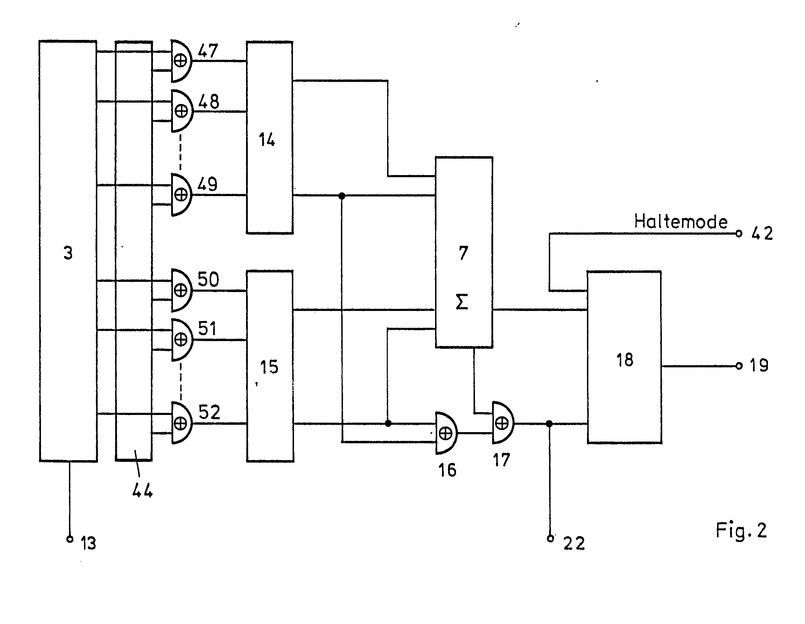

Fig. 1 zeigt ein Blockschaltbild zur Erkennung der Synchronisationswörter. Das an der Klemme 1 ankommende Signal wird einem 4-Phasen-Demodulator 2 (CSPK) zugeführt. Der Datenstrom ist aufgeteilt in zwei Bitebenen A und B. Da die Demodulation im CPSK-Demodulator 2 mehrdeutig ist, können die Signale A, B invertiert oder nichtinvertiert auftreten, d.h. es gibt für jede Bitebene zwei Möglichkeiten. Die Daten jeder Bitebene werden jeweils auf Schieberegister 3 bzw. 4 gegeben. Durch Vergleich der in das Schieberegister 3, 4 eingelesenen Daten mit dem durch eine Schaltungsanordnung 44, Fig. 2, festverdrahteten Synchronwort wird in der Stufe 5 bzw. 6 die Kreuzkorrelationsfunktion gebildet. Die Stufen 5 und 6 sind jeweils Speicherbausteine, die in zwei Teile geteilt sind. Durch Addition der Inhalte der aufgerufenen Adressen der Speicher in den Additionsstufen 7 bzw. 8 kann der jeweilige Wert der Kreuzkorrelationsfunktion ermittelt werden. Eine nachfolgende Schwellwertlogik 9 bzw. 10 unterscheidet anhand des eingegebenen Kreuzkorrelationswertes, ob das Sync-Wort oder seine Invertierung oder kein Sync-Wort empfangen worden ist. In der Stufe 11 wird die zeitliche Lage des Synchronwortes festgestellt und der interne Rahmentakt gegebenenfalls nachgestellt. Es kann gleichfalls festgestellt werden, ob die Teildatenströme A und B in invertierter, nichtinvertierter und/oder vertauschter Lage empfangen worden ist. Mittels der Gabelschaltung 12 werden die Teildatenströme gegebenfalls korrigiert.

Fig. 2 zeigt ein Schaltbild zur Ermittlung der Kreuzkorrelationsfunktion. Der Datenstrom gelangt von der Klemme 13 seriell in das Schieberegister 3. An den parallelen Ausgängen des Schieberegisters 3 liegt jeweils eine Bitfolge von 16 Bit an. Jeweils 8 Bit des an den parallelen Ausgängen des Schieberegisters 3 anliegenden Datenwortes werden über Exklusiv-ODER-Gatter 47–49 bzw. 50–52 mit dem entsprechenden Teilcodewort des Synchronisationswortes verglichen. Die Ausgänge der Exklusiv-ODER-Gatter werden auf ein Prom (PROM = programmable read only memory) 14 bzw. 15 gegeben. Das jeweilig an den acht Ausgängen der Exklusiv-ODER-Gatter 47–49 bzw. 50–52 anliegende Datenmuster gibt eine Adresse in den Promschaltkreisen 14 oder 15 an. Die Inhalte der aufgerufenen Speicherstellen der Promschaltkreise 14 und 15 werden auf ein Addierglied 7 gegeben. Je nach dem Codewort, das an den Ausgängen des Schieberegisters 3 anliegt, werden in den Promschaltkreisen 14 und 15 jeweils bestimmte Adressen aufgerufen, die einen Speicherinhalt zwischen −4 bis +4 binär codiert aufrufen, der der jeweiligen Anzahl der Übereinstimmungen entspricht. Die Addition im Addierglied 7 ergibt den Wert der Kreuzkorrelationsfunktion (−8 bis +8). Die beiden höchstwertigen Bits der an den Ausgängen der Promschaltkreise 14 und 15 anliegenden Speicherinhalte werden auf ein Exklusiv-ODER-Gatter 16 gegeben. Der Ausgang des Exklusiv-ODER-Gatters 16 sowie die höchstwertige Stelle des Ausgangs des Addiergliedes 7 führen auf ein weiteres Exclusiv-ODER-Gatter 17, dessen Ausgang das höchstwertige Bit des am Ausgang des Addierers 7 anstehenden Kreuzkorrelationswertes im 2er-Komplement darstellt. Der Ausgang des Addierers 7 stellt zusammen mit dem Ausgang des Exklusiv-ODER-Gatters 17 den ermittelten Wert der Kreuzkorrelationsfunktion dar, der im 2er-Komplement dargestellt ist.

Dabei ist das Ausgangssignal des Exklusiv-ODER-Gatters 17 das höchstwertige Bit und stellt damit das Vorzeichen der Kreuzkorrelationsfunktion dar.

Durch die Werte am Ausgang des Addierers 7 und am Ausgang des Exklusiv-ODER-Gatters 17 wird ein weiterer Promschaltkreis 18 angesteuert.

Überschreiten die am Promschaltkreis 18 anliegenden Adress-Codewörter in ihrer Wertigkeit betragsmässig eine vorgegebene Schwelle, so werden die dazugehörigen Speicherplätze mit logisch «1» gekennzeichnet. Ein aufgerufener Speicherinhalt logisch «1», der an Klemme 19 ausgegeben wird, zeigt die Erkennung eines Synchronisationswortes an, wobei am Zustand der Klemme 22 angezeigt wird, ob invertierte oder nichtinvertierte Lage vorliegt.

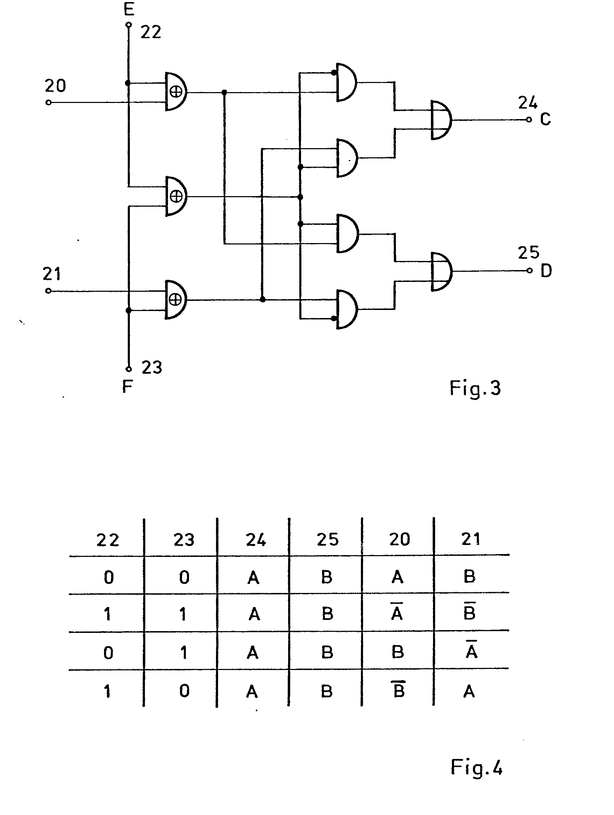

Fig. 3 zeigt eine Gabelschaltung, die durch die Signale E und F an den Klemmen 22 und 23 gesteuert wird.

Die Signale E und F kommen aus den Korrelatoren für die Bitebene A und B und entsprechend den jeweiligen höchstwertigen Bit des Korrelatorausgangssignals von A und B. Die Schaltung nach Fig. 3 ist nach folgender Struktur aufgebaut:

$$C = (E.\overline{F} + \overline{E}.F) \cdot (A.\overline{E} + \overline{A}.E) + (E.\overline{F} + \overline{F}.E) \cdot (B.\overline{F} + \overline{B}.F)$$

$$D = (E.\overline{F} + \overline{E}.F) \cdot (B.\overline{F} + \overline{B}.F) + (E.\overline{F} + \overline{E}.F) \cdot (A.\overline{E} + \overline{A}.E)$$

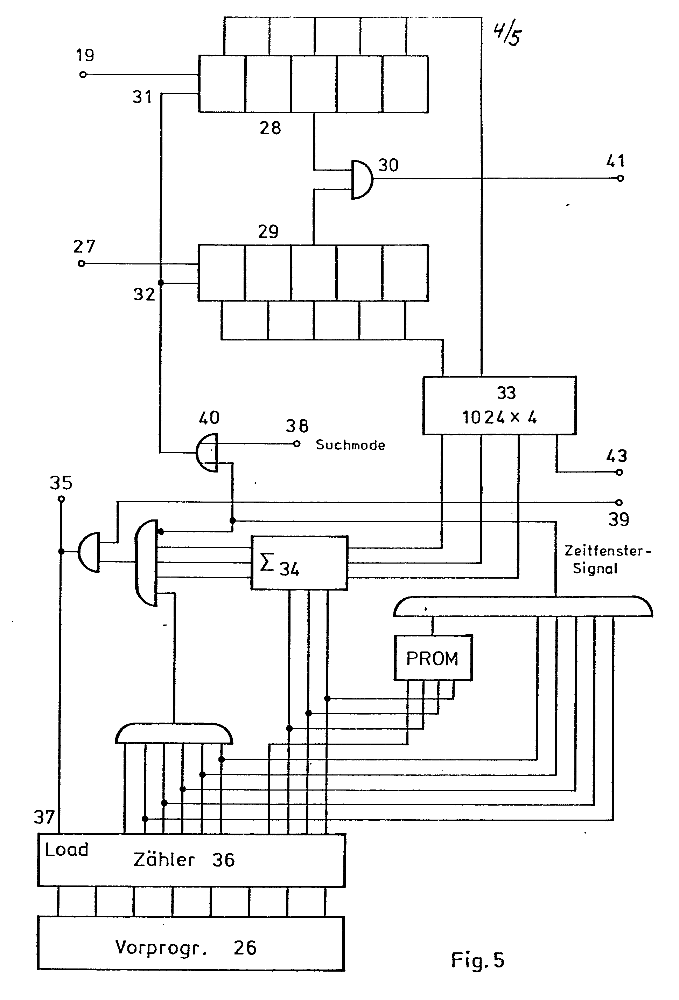

Die Ausgangssignale C und D an Klemme 24 und 25 der Gabelschaltung nach Fig. 3 ergeben sich bei einem Eingangssignal A und B an Klemme 20 und 21 je nach der Steuerinformation an Klemme 22 und 23. Mit Hilfe dieser Schaltung können zwei Datenströme entweder vertauscht oder/und invertiert werden (siehe Fig. 4).

Fig. 5 zeigt eine Schaltung zur Erkennung der Lage des Synchronisationsmusters im Rahmen. Den Klemmen 19 und 27 werden die Signale der Speicherstellen eines Promschaltkreises 18, wie in Fig. 2 dargestellt, zugeführt. Es ist jeweils ein Schieberegister 28 und 29 für jeweils einen Teilrahmen vorgesehen. Die Schieberegister 28 und 29 enthalten jeweils 5 Bitzellen, an deren mittleren Werten ein UND-Gatter 30 angeschlossen ist. Weiterhin sind Strobe-Eingänge 31 bzw. 32 vorhanden. Die parallelen Ausgänge des Schieberegisters 28 und 29 führen auf einen 1024 × 4 Promschaltkreis 33. Der Inhalt der angesprochenen Speicherstellen des Promschaltkreises 33 führt auf einen Addierer 34, dem gleichfalls aus einem vorprogrammierbaren Rahmen-Zähler 26, 36 Zählerzustände zugeführt werden. Im dargestellten Beispiel zählt der Zähler jeweils bis zu einer Adresse 320. Sobald der Zähler seine Endadresse erreicht hat, wird seinem Load-Eingang 37 ein Impuls zugeführt und der Zähler wird wieder auf den vorprogrammierbaren Ausgangszustand zurückversetzt.

Zum erstmaligen Suchen des Rahmentaktes wird dem Restart-Eingang 39 ein Signal zugeführt, das den Zähler 36 neu setzt. Gleichzeitig werden über das ODER-Gatter 40 die Strobe-Eingänge 31 und 32 der Schieberegister 28 und 29 angesprochen. Da die Ausgänge der Schieberegister 28 und 29 auf den Promschaltkreis 33 führen, wird jeweils eine bestimmte Adresse des Promschaltkreises 33 angesprochen. Die Ausgänge der Korrelator-Schwellwertlogik der Bitebenen A und B sind über die Klemmen 19 und 27 mit den seriellen Eingängen der Schieberegister 19 und 27 verbunden.

An Klemme 38 liegt die aus der Ablaufsteuerung gewonnene Lage des Zeitfensters vor. Sie wird über das STROBE-Gatter 40 an die Strobeeingänge 31 und 32 gegeben.

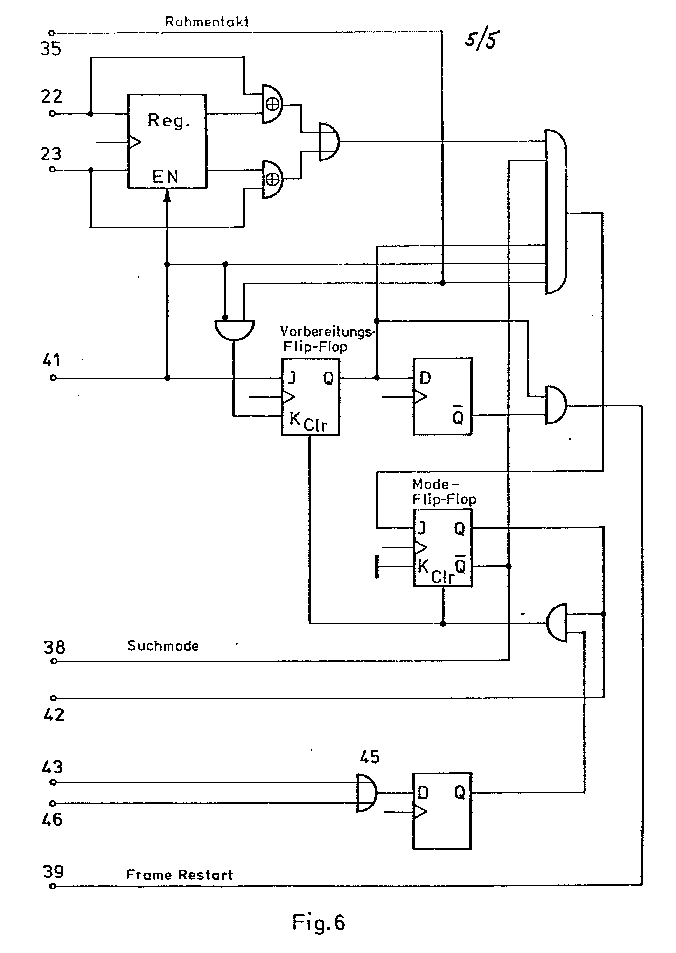

Die nach 5 im Zeitfenster auftretenden Taktschritten in die Schieberegister 28 und 29 eingelesene Information wird sodann mit Hilfe des Promschaltkreisinhaltes 33 ausgewertet. Der Inhalt der Speicherstelle der aufgerufenen Adresse gibt dem Addierer 34 die Information, wie weit der vorliegende Taktschritt vom Rahmentakt entfernt liegt. In der Sollage des Synchronisationstaktes befindet sich der Takt in den mittleren Speicherzellen der Schieberegister 28 und 29. Über das daran angeschlossene UND-Gatter 30 wird ein Impuls an die Klemme 41 abgegeben. Über eine angeschlossene Auswertelogik, die in Fig. 6 dargestellt ist, wird ein Impuls über die Klemme 39 auf den Load-Eingang 37 gegeben. Der Zähler 36 beginnt damit neu zu zählen. Wenn die Sollage nicht erreicht ist, z.B. durch einen Bitslip, wird über eine andere aufgerufene Adresse des Promschaltkreises 33 die Zählsumme des Zählers 36 verändert. Damit verschiebt sich die Taktsynchronisierung des Rahmens in der richtigen Weise.

Fig. 6 zeigt eine Auswertelogik zur Steuerung des Ablaufs von Such- und Haltevorgang. Den Klemmen 22 und 23 werden die Lageinformationen des Synchronwortes aus den beiden Teilrahmen A, B zugeführt. Sobald das Synchronwort in der richtigen zeitlichen Lage vorliegt, erhält die Eingangsklemme 41 aus dem UND-Gatter 30 einen Impuls. Der Suchmode wird durch einen Zustandswechsel auf logisch 1 an der Klemme 38, die auf das ODER-Gatter 40 führt, ausgelöst. Ein Impuls an der Klemme 39 führt über ein ODER-Gatter auf den Load-Eingang 37 des Zählers 36 und bewirkt einen Neustart des Rahmenzählers 36. Das Signal am Load-Eingang 37 stellt gleichzeitig den Rahmentakt dar.

Der Promschaltkreis 33 gibt nur dann einen Impuls an die Klemme 43 ab, wenn kein Synchronisationswort gefunden wird. Der Impuls an der Klemme 43 führt auf ein ODER-Gatter 45, dessen Klemme 46 einen Impuls zur erstmaligen Initialisierung der Gesamtschaltung zugeführt werden kann. An die Klemme 42 sind die Promschaltkreise 18 der Schaltung nach Fig. 2 für die beiden Teilrahmen angelegt, so dass die mit Hilfe der Promschaltkreise 18 festgelegten Schwellwerte für die Kreuzkorrelationsfunktion umgeschaltet werden können.

## Patentansprüche

1. System zur Übertragung und zum Empfang von digitalen Informationssignalen, insbesondere für die digitale Tonübertragung über Satelliten, bei dem die Datenfolgen in einem Rahmen zeitlich nacheinander angeordnet sind, und bei dem im Empfänger der Rahmen in zeitlich parallele, die Datenfolgen darstellende Teilrahmen (A, B) aufgeteilt ist, dadurch gekennzeichnet, dass jeder Teilrahmen (A, B) ein Synchronisationswort eines gleichen oder äquivalenten Typs gleicher Länge aufweist, dass für die zeitliche Erkennung und gegebenenfalls für die Kompensation der Phasenlage der Teilrahmen (A, B) jeweils ein Korrelator (3, 5, 7; 4, 6, 8; 3, 7, 14, 15, 44, 47–52) je Teilrahmen (A, B) verwendet wird, dass für die Synchronisation Codeworte verwendet werden, die ein eindeutiges Maximum ihrer Autokorrelationsfunktion für den Zeitpunkt $T = 0$ aufweisen, und dass die Autokorrelationsfunktion für alle Zeitpunkte $T \neq 0$ betragsmässig minimal ist.

2. System nach Anspruch 1, dadurch gekennzeichnet, dass eines der folgenden Synchronisationswörter, deren Invertierung, Spiegelung (rückwärts gelesen) oder invertierte Spiegelung verwendet ist, wobei 0 logisch 0 und 1 logisch 1 darstellt:

1. 0110100001110111
2. 0101101110111000
3. 0100100010001111
4. 0100010010111100

3. System nach Anspruch 1, dadurch gekennzeichnet, dass eine Schaltungsanordnung (Fig. 5) zur Erkennung der zeitlichen Lage des Synchronisationswortes und zur Korrektur der zeitlichen Lage des Rahmens vorhanden ist.

4. System nach Anspruch 1, dadurch gekennzeichnet, dass eine Schaltung zur Vertauschung (Fig. 3) der ankommenden Datenströme (A und B) vorgesehen ist, die von einer Synchronisationsworterkennungsschaltung gesteuert ist.

5. System nach Anspruch 1, dadurch gekennzeichnet, dass zum erstmaligen bzw. Wiederauffinden des Synchronisationszustandes zweimal das Vorhandensein des Synchronisationswortes geprüft wird.

6. System nach Anspruch 1, dadurch gekennzeichnet, dass zwei Betriebszustände vorgesehen sind, wobei in einem ersten Betriebszustand zweimal das Vorhandensein des Synchronisationsmusters geprüft wird und dass im Fall, dass das Synchronisationsmuster erkannt wird, in den zweiten Betriebszustand geschaltet wird, in dem die Phasenlage der Datenfolge auf ± 2 Bittakte vom Normalzustand geprüft wird und bei Abweichung vom Normalzustand eine zeitliche Korrektur unmittelbar im nächsten Rahmen erfolgt.

7. System nach Anspruch 1, dadurch gekennzeichnet, dass zur Ermittlung des Synchronisationswortes zwei Speicherbausteine (14, 15) verwendet sind, deren Ausgänge über eine Additionsschaltung (7) den Wert der Kreuzkorrelation zwischen dem vereinbarten und empfangenen Synchronisationswort ergeben.

8. Schaltung nach Anspruch 1, dadurch gekennzeichnet, dass eine Schwellwertlogik vorhanden ist, die einen Speicherbaustein (18) enthält, in dem jedem Kreuzkorrelationswert eine Adresse zugeordnetist, unter der die Repräsentativwerte für die Zustände: Sync-Wort vorhanden, invertiertes Sync-Wort vorhanden und kein Sync-Wort vorhanden abgespeichert sind.

**Revendications**

1. Système pour la transmission et la réception de signaux numériques d'informations, notamment pour la transmission numérique de signaux audio, par l'intermédiaire de satellites, dans lequel les séquences de données sont disposées temporellement l'une après l'autre dans une trame, et dans lequel, dans un récepteur, la trame est divisée en trames partielles (A, B) parallèles dans le temps et représentant les séquences de données, caractérisé en ce que chaque trame partielle (A, B) comporte un mot de synchronisation d'un type identique ou équivalent et de même longueur, en ce que, pour la reconnaissance temporelle, et le cas échéant pour la compensation de la position de phase des trames partielles (A, B), il est prévu pour chaque trame partielle (A, B) un corrélateur (3, 5, 7; 4, 6, 8; 3, 7, 14, 15, 44, 47–52), en ce que, pour la synchronisation, on utilise des mots codés qui comportent pour leur fonction d'autocorrélation un seuil maximum pour l'instant T = O et en ce que, pour toutes les valeurs les instants T $\neq$ O, la fonction d'autocorrélation a une valeur minimale.

2. Système selon la revendication 1, caractérisé en ce qu'on utilise un des mots de synchronisation suivants, son inverse, son symétrique (lu vers l'arrière) ou son symétrique inversé, dans lequel un 0 représente un 0 logique et un 1 représente un 1 logique:

1) 0110100001110111
2) 0101101110111000
3) 0100100010001111
4) 0100010010111100.

3. Système selon la revendication 1, caractérisé en ce qu'il est prévu un circuit (figure 5) pour reconnaître la position temporelle du mot de synchronisation et pour corriger la position temporelle de la trame.

4. Système selon la revendication 1, caractérisé en ce qu'il est prévu un circuit pour permuter (figure 3) les flux de données entrants (A et B), qui est commandé par un circuit de reconnaissance de mots de synchronisation.

5. Système selon la revendication 1, caractérisé en ce que, pour chercher une première fois ou bien pour rechercher l'état de synchronisation, l'existence du mot de synchronisation est contrôlée deux fois.

6. Système selon la revendication 1, caractérisé en ce qu'il est prévu deux états de fonctionnement, en ce que dans un premier état de fonctionnement l'existence du modèle de synchronisation est contrôlée deux fois et en ce que, dans la cas où le modèle de synchronisation est reconnu, on commute dans le second état de fonctionnement dans lequel la position de phase de la séquence de données est contrôlée pour ± 2 signaux d'horloge par rapport à l'état normal et, dans le cas d'un écart par rapport à l'état normal, une correction temporelle est effectuée immédiatement dans la trame suivante.

7. Système selon la revendication 1, caractérisé en ce que, pour obtenir le mot de synchronisation, on utilise deux unités de mémoire (14, 15) dont les sorties établissent par l'intermédiaire d'un circuit d'addition (7) la valeur de la corrélation croisée entre le mot de synchronisation de consigne et le mot de synchronisation recu.

8. Circuit selon la revendication 1, caractérisé en ce qu'il est prévu une logique à valeur de seuil qui contient une unité de mémoire (18) dans laquelle à chaque valeur de corrélation croisée est associée une adresse où sont mémorisées les valeurs représentatives des états: existence de mot de synchronisation, existence de mot de synchronisation inversé et absence de mot de synchronisation.

**Claims**

1. System for the transmission and reception of digital information signals, especially for the digital transmission of sound by way of satellites, in which the data sequences are arranged following one another in time in a block and in which in the receiver the block is divided in two timewise parallel part blocks (A, B) representing the data sequences, characterized in that each part block (A, B) exhibits a synchronisation word of an equal or equivalent type of equal length, that for the time recognition and if necessary for the compensation of the phase position of the part blocks (A, B) a correlator (3, 5, 7; 4, 6, 8; 3, 7, 14, 15, 44, 47–52) is used for each part block, that for the synchronisation code words are used which exhibit an unequivocal maximum of their autocorrelation function for the instant $T = O$, and that the auto correlation function for all instants $T \neq O$ is effectively minimal.

2. System according to Claim 1, characterized in that one of the following synchronising words, their inverse, mirror image (read backwards) or inverted mirror image is used; in which 0 represents logic 0 and 1 represents logic 1:

1. 0110100001110111
2. 0101101110111000
3. 0100100010001111
4. 0100010010111100

3. System according to Claim 1, characterized in that a circuit arrangement (Fig. 5) is available for recognition of the time position of the synchronisation word and for correcting the time position of the block.

4. System according to Claim 1, characterized in that a circuit is provided for the exchange (Fig. 3) of the incoming data streams (A and B) which circuit is controlled by a synchronisation word recognition circuit.

5. System according to Claim 1, characterized in that for the first or repeated seeking of the synchronisation condition the presence of the synchronisation word is twice tested.

6. System according to Claim 1, characterized in that two operating conditions are provided for, such that in a first operating condition the presence of the synchronisation model is tested twice and that in the event that the synchronisation model is recognised, switching occurs into the second operating condition in which the phase position of the data sequence is tested at $\pm$ 2 bit times from the normal condition, and that on finding deviation from the normal condition a time correction occurs directly in the next block.

7. System according to Claim 1, characterized in that for the purpose of identifying the synchronisation word, two store building blocks (14, 15) are utilised the outputs of which yield the value of the cross correlation between the established and the received synchronisation word by way of an addition circuit (7).

8. Circuit according to Claim 1, characterized in that a threshold value logic is available which includes a store building block (18) in which an address is associated with each cross correlation value under which the representative value for the eventualities: sync word present, inverted sync word present, and no sync word present, is stored.

Fig.1

0 084 787

Fig. 2

0 084 787

3/5

Fig.3

| 22 | 23 | 24 | 25 | 20 | 21 |
|----|----|----|----|----|----|
| 0  | 0  | A  | B  | A  | B  |
| 1  | 1  | A  | B  | $\overline{A}$ | $\overline{B}$ |
| 0  | 1  | A  | B  | B  | $\overline{A}$ |
| 1  | 0  | A  | B  | $\overline{B}$ | A  |

Fig.4

4/5

Fig. 5

Fig.6